(19) Europäisches Patentamt / European Patent Office / Office européen des brevets

(11) **EP 2 827 174 B1**

(12) **FASCICULE DE BREVET EUROPEEN**

(45) Date de publication et mention
de la délivrance du brevet:
**01.03.2017 Bulletin 2017/09**

(51) Int Cl.:
***G01S 17/58*** *(2006.01)*     ***G01S 17/88*** *(2006.01)*
***G01S 7/486*** *(2006.01)*

(21) Numéro de dépôt: **14176812.7**

(22) Date de dépôt: **11.07.2014**

(54) **Procédé et dispositif de mesure de la vitesse d'un aéronef par effet Doppler**

Geschwindigkeitsmessverfahren und -vorrichtung eines Luftfahrzeugs mithilfe des Dopplereffekts

Method and device for measuring the speed of an aircraft by Doppler effect

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.07.2013 FR 1301691**

(43) Date de publication de la demande:
**21.01.2015 Bulletin 2015/04**

(73) Titulaire: **Thales
92400 Courbevoie (FR)**

(72) Inventeurs:
• **Baral-Baron, Grégory
38180 SEYSSINS (FR)**
• **Lacondemine, Xavier
26300 ALIXAN (FR)**
• **Lahalle, Elisabeth
91190 GIF SUR YVETTE (FR)**
• **Fleury, Gilles
75019 PARIS (FR)**

(74) Mandataire: **Henriot, Marie-Pierre et al
Marks & Clerk France
Conseils en Propriété Industrielle
Immeuble Visium
22, Avenue Aristide Briand
94117 Arcueil Cedex (FR)**

(56) Documents cités:
**EP-A2- 2 282 216    EP-A2- 2 325 655**

• **NICOLAS CEZARD: "Development of a
short-range 355-nm Rayleigh-Mie Ldar using
Michelson interferometer for wind speed
measurements", SPIE, PO BOX 10 BELLINGHAM
WA 98227-0010 USA, 1 mai 2007 (2007-05-01),
XP040247277,**

**Description**

Le domaine de l'invention est celui de la mesure de vitesse d'un aéronef par anémométrie laser Doppler, l'aéronef étant équipé d'un LiDAR à détection cohérente.

Le principe de l'anémométrie laser Doppler est de mesurer le décalage de fréquence entre le faisceau laser émis et le faisceau rétrodiffusé par les particules (ou aérosols) naturellement présentes dans l'atmosphère, ce décalage de fréquence étant directement proportionnel à la composante radiale (c'est-à-dire selon l'axe de visée du laser) de la vitesse relative du porteur par rapport à l'air. Dans la suite la vitesse selon l'axe de visée du laser est désignée plus simplement vitesse.

Le procédé de mesure de la vitesse de l'aéronef comporte de manière classique les étapes suivantes :

- émission par le lidar d'un faisceau laser,
- réception par le lidar de l'onde rétrodiffusée par des particules présentes sur le trajet du faisceau émis et obtention, en sortie du photodétecteur, du signal hétérodyne résultant du battement entre l'onde rétrodiffusée et une fraction de l'onde émise, aussi appelée oscillateur local,
- traitement du signal hétérodyne par une unité de traitement installée à bord de l'aéronef pour obtenir la vitesse.

Dans certaines conditions atmosphériques, notamment à haute altitude, le coefficient de rétrodiffusion atmosphérique peut, du fait de la raréfaction des aérosols, se révéler insuffisamment élevé pour produire un signal LiDAR exploitable. En effet, le signal hétérodyne est, du fait de la nature quantique de la lumière, entaché d'un bruit de mesure appelé indifféremment bruit de Schottky ou bruit de photons auquel peuvent s'ajouter d'autres contributeurs tels que le bruit d'intensité du laser, le bruit d'obscurité du photodétecteur ou encore le bruit thermique. Aussi, malgré l'amplification apportée par le procédé de détection cohérente, le rapport Signal sur Bruit demeure potentiellement problématique. Le régime de fonctionnement mono-particule répond à ces situations. Il consiste à concentrer la puissance laser dans un volume très faible ($\sim$0.1 mm$^3$) en utilisant un faisceau fortement focalisé. Lorsque les particules « cibles » traversent le faisceau à proximité de son point de focalisation, elles produisent alors un signal détectable individuellement.

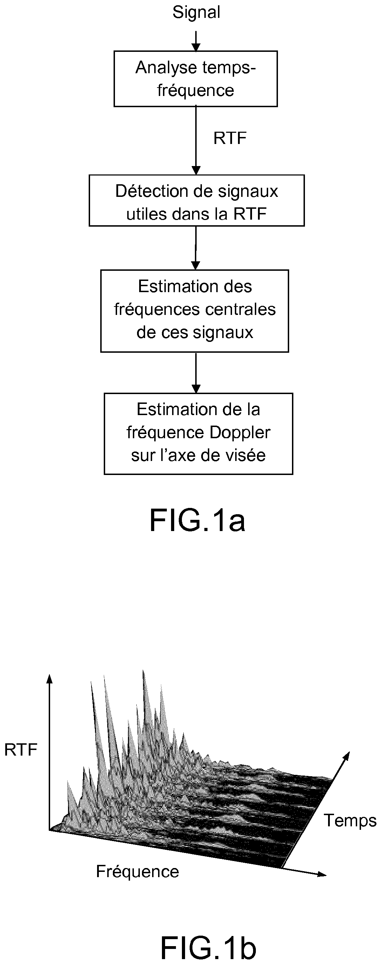

Les traitements existants dont un exemple est illustré figure 1a, consistent à détecter individuellement dans le signal hétérodyne, les signaux utiles issus du passage des particules dans le faisceau laser afin d'estimer leur fréquence centrale. Les signaux utiles sont analysés à partir d'une représentation temps-fréquence (RTF), bien adaptée aux signaux non stationnaires, dont un exemple est illustré figure 1b. Un signal utile est détecté si son amplitude sur la représentation temps-fréquence est supérieure à un seuil de détection défini en fonction de la probabilité de fausse alarme maximale visée. Puis la fréquence centrale de chaque signal détecté est estimée. La fréquence Doppler sur un axe de visée est alors estimée à partir des fréquences centrales des signaux mono-particules détectés sur une période de temps donnée.

Afin d'estimer la fréquence Doppler - et par voie de conséquence la vitesse - avec une précision suffisante, il est nécessaire de maintenir une faible probabilité de fausses alarmes ce qui contraint à adopter un seuil de détection suffisamment élevé. Pour obtenir par exemple une précision ayant un écart-type $\sigma$ d'environ 0.2 MHz en fréquence Doppler, qui équivaut à une précision ayant un écart-type $\sigma$ d'environ 0.15 m/s en vitesse, pour une longueur d'onde de $\lambda \sim 1.5\ \mu$m, il faut adopter un seuil d'environ 12.5 à 13 dB au-dessus du niveau moyen du bruit sur la RTF.

Un tel traitement permet d'atteindre un niveau de performances satisfaisant dans un grand nombre de cas mais il n'offre pas les marges suffisantes pour garantir la disponibilité, la précision et l'intégrité de la mesure en toute situation, comme le requièrent des domaines d'emploi tels que l'aéronautique.

Il est également connu de l'art antérieur, par exemple par le brevet européen EP 2 282 216, un système et un procédé d'anémométrie mono-particule par LIDAR comprenant l'émission continue d'un ou de plusieurs faisceaux lumineux à travers un gaz contenant des particules.

En conséquence, il demeure à ce jour un besoin pour un procédé de mesure de vitesse d'un aéronef donnant simultanément satisfaction à l'ensemble des exigences précitées, en termes de disponibilité, de précision et d'intégrité, y compris en situation locale et ponctuelle de très faible ensemencement de l'atmosphère en particules.

Plus précisément l'invention a pour objet un procédé de mesure de la vitesse d'un aéronef équipé d'un lidar à détection cohérente et d'une unité de traitement du signal détecté, qui comporte les étapes suivantes :

- émission par le lidar d'un faisceau laser,
- réception par le lidar d'un signal rétrodiffusé par des particules présentes sur le trajet du faisceau émis et obtention du signal hétérodyne correspondant,
- traitement du signal hétérodyne par l'unité de traitement qui comporte les sous-étapes suivantes :

  - analyse temps-fréquence du signal hétérodyne, pour obtenir une représentation temps-fréquence de ce signal ou RTF,
  - estimation de la vitesse de l'aéronef à partir de l'analyse temps-fréquence.

Il est principalement caractérisé en ce que l'étape de traitement du signal hétérodyne comporte une sous-étape de test statistique avec :

- estimation d'une fonction statistique de l'amplitude de la RTF du signal hétérodyne, dans une plage de valeurs correspondant à une plage de vitesses de l'aéronef prédéterminée,
- un bruit de mesure étant associé au signal hétérodyne, estimation d'une fonction statistique de référence de la RTF de ce bruit,
- calcul d'un écart entre la fonction statistique de la RTF du signal hétérodyne et la fonction statistique de référence de la RTF du bruit, la vitesse de l'aéronef étant en outre estimée à partir de cet écart.

Il s'agit d'une approche statistique ne nécessitant aucun a priori sur les signaux recherchés mais seulement de connaître la fonction statistique de la RTF du bruit. Cette fonction peut être estimée en temps-réel à partir d'un échantillon de bruit seul.

Ce procédé permet d'améliorer la disponibilité de la mesure de vitesse en situation de faible concentration de l'atmosphère en particules accessibles à la mesure LiDAR, et ce grâce à l'exploitation des signaux de plus faible rapport signal à bruit.

L'implémentation est peu coûteuse en temps de calcul et parfaitement compatible avec une application temps-réel. Le calcul de la fonction de répartition n'est qu'un simple cumul, de complexité O(N) alors qu'avec un procédé tel que décrit en préambule, le calcul de la RTF a une complexité $O(N \log_2(N))$ supérieure ; or ce calcul selon l'art antérieur peut d'ores et déjà être implémenté en temps-réel avec les composants électroniques programmables actuels.

Selon une caractéristique de l'invention, le test statistique comporte en outre une sélection d'une bande de fréquence à partir de l'écart et d'un seuil prédéterminé, avec éventuellement une détection de signaux utiles dans la RTF du signal hétérodyne, dans cette bande de fréquence.

Selon une caractéristique de l'invention, lorsque des signaux utiles ont été détectés dans cette bande de fréquences, le test statistique comporte en outre une estimation de la fréquence centrale pour chaque signal utile, l'étape d'estimation de la vitesse de l'aéronef étant alors réalisée à partir de ces fréquences centrales.

Le calcul de la RTF peut être obtenu par transformation temps-fréquence, en utilisant par exemple une Transformée de Fourier Court Terme (TFCT) ou par transformation temps-échelle. Nous pouvons, par exemple, utiliser une fenêtre gaussienne pour la TFCT ou une ondelette de Morlet pour la transformée temps-échelle.

La fonction statistique est typiquement une fonction de répartition ou une loi de distribution.

Le bruit est de préférence stationnaire sur la durée d'estimation de la fonction de répartition, associée à ladite plage de vitesses.

L'écart calculé est par exemple un écart quadratique moyen pondéré ou calculé par un test du $\chi^2$ ou de Kolmogorov-Smirnov.

Le laser est par exemple un laser Infra-Rouge (IR).

L'invention a aussi pour objet, un produit programme d'ordinateur, ledit programme d'ordinateur comprenant des instructions de code permettant d'effectuer les étapes du procédé tel que décrit, lorsque ledit programme est exécuté sur un ordinateur.

L'invention concerne également un dispositif de mesure de la vitesse d'un aéronef, qui comporte associée à un lidar à détection cohérente, une unité de traitement du signal détecté comprenant des moyens de mise en oeuvre du procédé tel que décrit, ces moyens pouvant être ce programme d'ordinateur.

D'autres caractéristiques et avantages de l'invention apparaîtront à la lecture de la description détaillée qui suit, faite à titre d'exemple non limitatif et en référence aux dessins annexés dans lesquels :

la figure 1a déjà décrite représente un organigramme montrant des étapes d'un procédé de mesure de la vitesse d'un aéronef selon l'état de la technique, avec en figure 1 b un exemple de RTF obtenue par TFCT, aussi désigné spectrogramme,
la figure 2 illustre schématiquement des particules présentes autour d'un faisceau laser,
la figure 3a représente un organigramme montrant des étapes d'un exemple de procédé de mesure de la vitesse d'un aéronef selon l'invention, avec en figure 3b un exemple de fonctions de répartition des RTF respectivement issues du signal détecté et du bruit de mesure,
les figures 4 montrent les résultats obtenus en utilisant un procédé tel que décrit en préambule et un exemple de procédé selon l'invention,
la figure 5 représente schématiquement un exemple de dispositif de mesure de la vitesse d'un aéronef selon l'invention.

D'une figure à l'autre, les mêmes éléments sont repérés par les mêmes références.

On rappelle tout d'abord le calcul permettant d'obtenir l'amplitude d'un signal sur le spectrogramme.

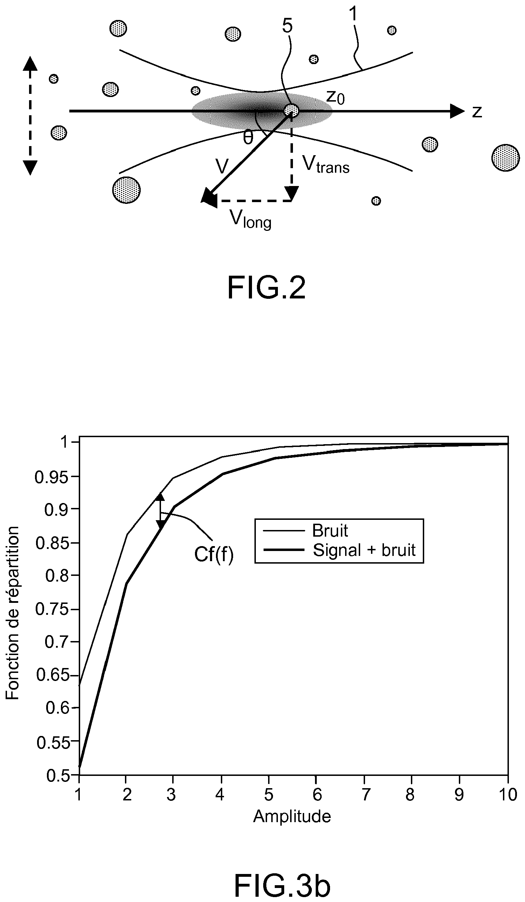

On considère un faisceau laser gaussien 1 de rayon $\omega_0$ au point de focalisation et de longueur d'onde $\lambda$. Soit une particule sphérique 5 de rayon r, animée d'une vitesse V et coupant le faisceau à une distance $z_0$ du point de focalisation comme illustré figure 2. La surface de rétrodiffusion $S_{eff}$ détermine la portion de l'onde émise rétrodiffusée par la particule. Cette surface est fonction de la taille de la particule, du milieu et de la longueur d'onde du laser.

La vitesse de cette particule peut être décomposée en une composante radiale (c'est-à-dire selon l'axe de propagation du faisceau laser) et une composante transversale (c'est-à-dire dans le plan orthogonal à l'axe de propagation du faisceau laser).

Le signal électrique résultant du passage de la particule dans le faisceau laser est un chirp linéaire d'enveloppe gaussienne dont l'expression simplifiée est donnée ci-dessous :

$$u(t) = s(t) + w(t)$$

$$s(t) = A_0 \exp\left(-\frac{8}{D^2}(t - t_0)^2\right) \cos\left(2\pi\left(f_0 t + \frac{Ve}{2}(t - t_0)^2\right) + \phi_0\right)$$

où :

$D = f(V, z_0)$ est la durée du signal

$V_e = f(V, z_0)$ la vitesse d'évolution de la fréquence instantanée,

$f_0 = f(V)$ est la fréquence Doppler du signal,

$A_0 = f(S_{eff}, z_0)$ est l'amplitude du signal,

$\Phi_0$ est une constante,

$t_0$ est l'instant auquel la particule coupe l'axe z.

$w(t)$ est un bruit de densité spectrale de puissance $\sigma_w^2(f)$.

Pour l'application visée, le Rapport Signal à Bruit (RSB) est défini selon :

$$RSB = \frac{A_0^2}{\int \sigma_w^2(f)df}$$

Pour des particules de petite taille, RSB < 1.

Afin d'améliorer le RSB, on considère une analyse temps-fréquence pour obtenir une RTF, qui peut elle-même être obtenue par une transformation temps-fréquence ou par une transformation temps-échelle.

On choisit dans notre exemple, une transformation temps-fréquence basée sur une décomposition par transformée de Fourier Court-Terme (TFCT) avec une fenêtre temporelle gaussienne ; le spectrogramme (carré du module de la transformée de Fourier Court Terme) est donc défini selon :

$$S(t, f) = |TFCT(t, f)|^2$$

avec :

$$TFCT(t, f) = \int_{-\infty}^{+\infty} u(\tau)h(\tau - t)\exp(-2i\pi f\tau)d\tau$$

$$h(t) = \frac{1}{\sqrt{2\pi}\sigma_h}\exp\left(-\frac{t^2}{\sigma_h^2}\right)$$

$\sigma_h$ étant une largeur temporelle prédéterminée pour fixer la largeur de l'enveloppe gaussienne de h(t).

Le spectrogramme S(t,f) du signal s(t) s'exprime :

$$S(t,f) = CNR \exp(-\frac{A(t-t_0)^2 + B(f-f_0)^2 - C(t-t_0)(f-f_0)}{Y})$$

avec :

$$CNR = RSB \frac{\sqrt{\pi}}{2\sigma_h \sqrt{Y}}$$

$$A = \frac{1}{\sigma_h^2}\left(\frac{16}{D^2}\left(\frac{16}{D^2} + \frac{1}{\sigma_h^2}\right) + 4\pi^2 Ve^2\right)$$

$$B = 4\pi^2\left(\frac{16}{D^2} + \frac{1}{\sigma_h^2}\right)$$

$$C = \frac{8\pi^2 Ve}{\sigma_h^2}$$

$$Y = \left(\frac{16}{D^2} + \frac{1}{\sigma_h^2}\right)^2 + 4\pi^2 Ve^2$$

L'amplitude maximale du spectrogramme d'un signal vaut donc :

$$S(t_0, f_0) = CNR = RSB \frac{\sqrt{\pi}}{2\sigma_h\sqrt{\left(\frac{16}{D^2}+\frac{1}{\sigma_h^2}\right)^2 + 4\pi^2 Ve^2}}$$

L'amplitude du spectrogramme d'un signal est amplifiée d'un facteur :

$$\frac{\sqrt{\pi}}{2\sigma_h\sqrt{\left(\frac{16}{D^2}+\frac{1}{\sigma_h^2}\right)^2 + 4\pi^2 Ve^2}}$$

Ce facteur vaut environ 15-20 dB pour les signaux utiles issus de particules croisant le faisceau laser en un point proche du point de focalisation. Lorsque le signal temporel est entaché d'un bruit gaussien, le spectrogramme est entaché d'un bruit de distribution exponentielle, ce qui conduit au choix d'un seuil de détection de 12.5-13 dB au-dessus de la valeur moyenne du spectrogramme du bruit de manière à obtenir de l'ordre de une à quelques fausses alarmes par période d'observation du signal, le nombre attendu de particules détectées sur la même période d'observation étant au minimum de quelques dizaines ; le spectrogramme du bruit est obtenu par la même analyse temps-fréquence (représentation temps-fréquence ou temps-échelle) que celle utilisée pour le signal détecté.

Ces valeurs numériques ainsi que celles données par la suite sont établies en prenant comme exemple un aéronef en situation (haute altitude : fond stratosphérique) de faible concentration de l'atmosphère en particules accessibles à la mesure de son LiDAR de longueur d'onde $\lambda \sim 1.5$ $\mu$m, et dont la vitesse air est comprise entre 0 et 300 m/s.

Comme indiqué en préambule, dans certaines conditions atmosphériques, les particules rencontrées peuvent être de très petites tailles (population de fond stratosphérique) ou le milieu peut être modifié (baisse du taux d'humidité). Dans ces cas, la surface de rétrodiffusion des particules va diminuer, entrainant une baisse de l'amplitude du spectrogramme des signaux. Il peut alors résulter qu'aucun signal issu de particule ne soit détecté pendant plusieurs dizaines de millisecondes.

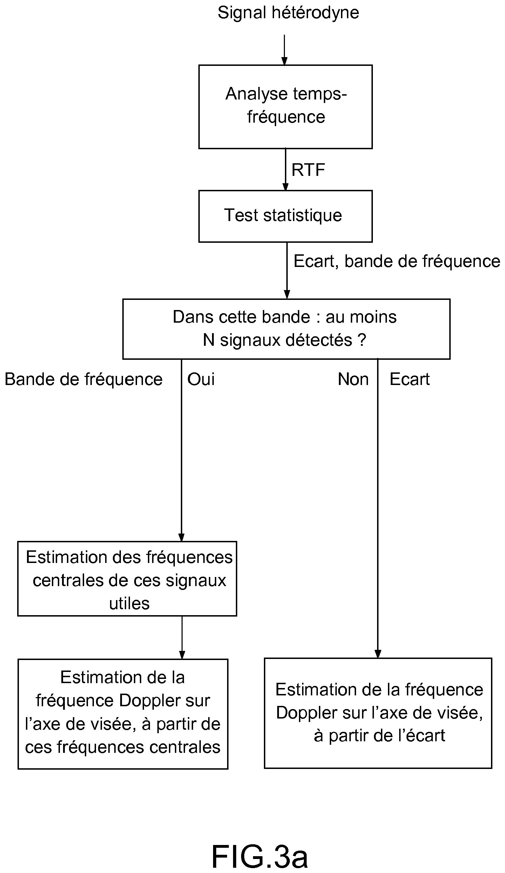

L'invention décrite en relation avec la figure 3a, est basée sur une estimation d'une fonction statistique de l'amplitude de la représentation temps-fréquence (ou temps-échelle) du signal analysé, pour chaque fréquence (ou pour chaque échelle) ; cette fonction statistique est typiquement la fonction de répartition ou la loi de distribution. Cette fonction est comparée à une fonction statistique (fonction de répartition ou loi de distribution) de référence de la RTF du bruit comme montré figure 3b. La RTF utilisée pour la caractérisation du bruit est la même que celle utilisée pour le signal analysé ; la RTF du bruit de mesure est par exemple déterminée par calcul ou déterminée a priori. L'objectif est de déterminer si les observations issues du signal rétrodiffusé suivent la fonction statistique issue du bruit. Dans le cas contraire, cela signifie que la statistique issue du bruit a été modifiée par des signaux utiles. Cette comparaison aussi désignée test statistique ou test d'adéquation, est effectuée pour chaque fréquence de la RTF et on définit une bande de fréquence des signaux utiles qui est composée des fréquences auxquelles il n'y a pas adéquation entre les observations et la loi de distribution issue du bruit.

Dans la suite on prend comme exemple de fonction statistique, la fonction de répartition.

Le calcul de la fonction de répartition de l'amplitude du spectrogramme $F_{obs}(f,x)$ se fait pour :

- toutes les fréquences $f_j$, $f_j \in [0, F_e/2]$, $F_e$ étant la fréquence d'échantillonnage prédéterminée en fonction de la vitesse maximale de l'aéronef,
- tous les instants $t_i$, $t_i \in [0, T_{obs}]$, où $T_{obs}$ est la période d'observation prédéterminée de manière à ce que la vitesse de l'aéronef soit stable sur cette période d'observation ; il s'agit d'un intervalle de temps très important par rapport à celui de la période d'échantillonnage,
- et $N_{obs}$ le nombre d'observations pendant $T_{obs}$, sur une plage d'amplitude $X_k$, $x_k \in [0, x_{max}]$, $X_{max}$ étant prédéterminé et correspondant à la valeur à partir de laquelle la fonction de répartition du bruit est quasiment égale à 1. Les signaux utiles étant rares dans certaines conditions, les variations engendrées sur la fonction de répartition du signal sont faibles. Afin de détecter ces variations, la variance de l'estimateur de la fonction de répartition doit être suffisamment faible. L'estimation de la fonction de répartition nécessite donc un grand nombre d'observations $N_{obs}$ afin de diminuer l'incertitude.

Elle est calculée de la manière suivante.

Pour i = 0 : $T_{obs}$

Pour j = 0 : $F_e/2$

Pour k = 0 : $x_{max}$

si $S(t_i,f_j) < x_k$ :

$$\hat{F}_{obs}\left(f_j, x_k\right) = \hat{F}_{obs}\left(f_j, x_k\right) + \frac{1}{N_{obs}}$$

Fin si

Fin pour ; Fin pour ; Fin pour ;

Si l'on prend comme exemple de bruit, un bruit considéré comme blanc gaussien sur toute la largeur d'une case fréquentielle de la RTF, la fonction de répartition de son spectrogramme vaut :

$$F(f, x) = 1 - \exp(-a(f).x)$$

avec $a(f) = 1 / E[x]$, E étant l'espérance mathématique.

Le test d'adéquation est alors réalisé pour chaque fréquence afin de déterminer si les observations proviennent de la fonction de répartition issue du bruit ou non. Ce test consiste à comparer la fonction de répartition empirique à celle issue du bruit. Différentes méthodes peuvent être utilisées, telles que les tests du $\chi^2$, de Kolmogorov-Smirnov ou Cramer-Von Mises. D'autres critères, comme la moyenne ou la moyenne quadratique des écarts entre les deux fonctions de répartition sont également envisageables.

Dans notre exemple on a utilisé la méthode suivante pour comparer les deux fonctions de répartition pour chaque fréquence, c'est-à-dire pour calculer l'écart $C_f(f)$ :

$$C_f(f) = \sum_x \frac{\left(F(f,x) - \hat{F}_{obs}(f,x)\right)^2}{1 - F(f,x)}$$

Si $C_f(f) \geq \alpha$, les observations ne correspondent pas à la fonction de répartition issue du bruit ; cela signifie donc que la répartition est modifiée par la présence de signal utile.

Pour le calcul du seuil $\alpha$, nous avons :

$$\alpha = \sum_x \frac{\left(F(f,x) - \hat{F}_{obs}(f,x)\right)^2}{1 - F(f,x)} = \sum_x \frac{(\exp(-ax) - \exp(-\hat{a}_{obs}x))^2}{\exp(-ax)}$$

$$\hat{a}_{obs} = \frac{1}{\hat{\mu}} = \frac{1}{\mu \pm k\sigma_x}$$

où $\mu = E[x]$, $k$ un paramètre prédéterminé en fonction d'un nombre de fausses alarmes accepté, $\sigma_x$ représente l'incertitude sur $\hat{\mu}$, $\sigma_x$ dépend du nombre d'observations utilisées pour l'estimation de $E[x]$ selon :

$$\sigma_x = \sqrt{\frac{D_{eq}}{D_{obs}}}$$

$D_{eq}$ est la durée équivalente, c'est à dire la largeur d'une fenêtre rectangulaire dont l'aire est identique à celui de la fenêtre gaussienne $h(t)$.

La représentation temps-fréquence s'étend sur une large bande de fréquence Doppler correspondant à toute la plage de vitesse relative possible entre un aéronef et la masse d'air au cours d'un vol. Cette bande de fréquence doit couvrir un domaine de vitesse allant typiquement de 0 à 300 m/s (pour un avion). Or, à chaque instant, les vitesses des particules utiles sont réparties selon une distribution gaussienne, centrée sur la vitesse de la masse d'air et dont la largeur, correspondant à la dispersion de vitesse entre les particules résultant de la turbulence de l'air, est de l'ordre de 0.2 m/s. Les fréquences des signaux utiles issus des particules sont donc contenues dans une bande de fréquence très inférieure à celle de la RTF. Au contraire, les fausses alarmes sont réparties sur toute la bande de la RTF selon une fonction de répartition dépendant de la nature du bruit. Pour un bruit blanc, la loi est uniforme.

Réduire la bande de fréquence analysée permet de diminuer fortement le nombre de fausses alarmes tout en conservant les signaux utiles. Le seuil de détection peut ainsi être diminué afin de détecter des signaux d'amplitude plus faible, issus de particules plus petites ou croisant le faisceau laser plus loin du point de focalisation.

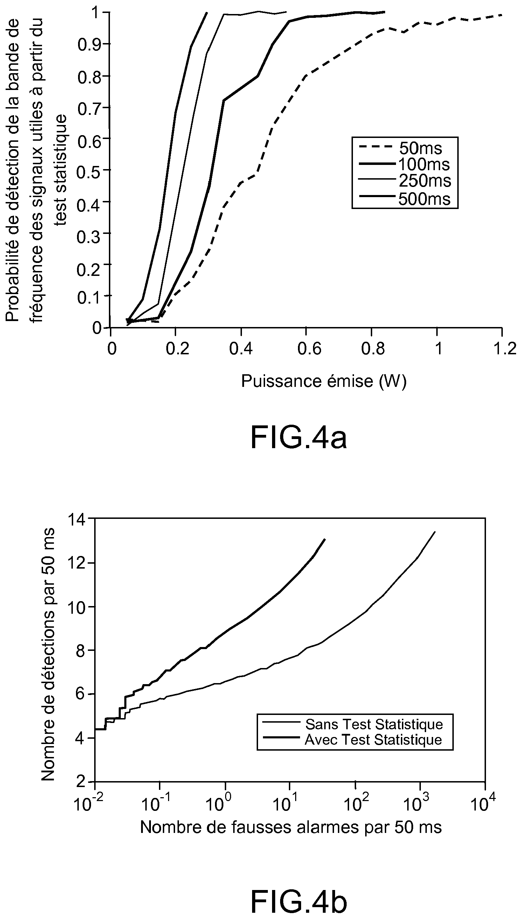

On sélectionne donc cette bande de fréquence dans laquelle les signaux utiles sont contenus. Il s'agit des fréquences $f$ telles que $C_f(f) \geq \alpha$. La probabilité de détection de cette bande de fréquence des signaux utiles, à partir du test statistique, augmente quand la durée d'observation croît alors que le nombre de fausses alarmes reste constant. Dans notre exemple, d'après les résultats de la figure 4a, une durée d'observation comprise entre 100 et 250 ms semble judicieuse car les variations du vecteur vitesse air sont suffisamment faibles sur cette période pour pouvoir considérer que la fréquence Doppler reste dans la même bande de fréquence. Au-delà de 250 ms, le gain apporté par une augmentation de la durée d'observation est faible et ce d'autant plus que la fréquence Doppler peut varier dans des proportions importantes sur cette période. On sélectionne donc une bande de fréquence dont la largeur est de l'ordre de 50 fois inférieure à celle de la représentation temps-fréquence.

Lorsque la bande de fréquence a été sélectionnée, on détecte les signaux utiles dans cette bande, en sélectionnant les points du spectrogramme $S(t,f)$ qui sont supérieurs à un seuil de détection prédéterminé en fonction de la valeur moyenne du spectrogramme du bruit.

Ce seuil de détection peut être déterminé de manière expérimentale. Il peut aussi être déterminé en fonction de différents paramètres : durée d'observation $T_{obs}$, nombre de fausses alarmes accepté, puissance émise par le laser du LiDAR, rayon des particules susceptibles de traverser le faisceau laser.

- Si la durée d'observation $T_{obs}$ augmente, la fonction de répartition empirique est évaluée à partir d'un plus grand nombre d'échantillons et l'incertitude diminue. Ainsi, le seuil de détection, qui est fonction de la durée d'observation, peut être diminué tout en conservant une probabilité de fausse alarme constante. La quantité moyenne d'information provenant des signaux utiles n'augmente pas mais sa variance diminue. Pour une durée d'observation plus longue, le résultat du procédé selon l'invention n'est pas modifié aux fréquences contenant des signaux utiles. Au contraire, la variance du bruit diminue, ce qui permet d'abaisser le seuil de détection et donc d'augmenter la probabilité de détection de la bande de signal utile.

- Cette approche statistique avec estimation de la plage de fréquence Doppler dans laquelle les signaux utiles doivent être recherchés, permet avantageusement de diminuer de plusieurs déciBels le seuil de détection tout en conservant le taux de fausse alarme souhaité. On considère par exemple qu'il est nécessaire de détecter au moins cinq signaux utiles pour obtenir une estimation précise et intègre de la fréquence Doppler. Ce nombre 5 n'est pas un minimum absolu dans la mesure où cela dépend de la dispersion de vitesse entre les particules résultant de la turbulence atmosphérique. En outre, le nombre de fausses alarmes doit être inférieur au nombre de signaux utiles. Le nombre de fausses alarmes détectées durant la période $T_{obs}$ est un processus de Poisson :

$$P(X = k) = \exp(-\Lambda)\frac{\Lambda^k}{k!}$$

avec $\Lambda$ le nombre moyen de fausses alarmes détectées durant la période Tobs.

Pour une période Tobs = 50 ms, nous fixons $\Lambda$ de manière à obtenir $P(X \geq 5) \leq 0.01$. D'où $\Lambda = 1.28$.

On a représenté figure 4b le nombre de signaux utiles détectés par période de 50 ms en fonction du nombre de fausses alarmes par période de 50 ms selon l'art antérieur (courbe a) et selon l'invention (courbe b). On constate que le procédé selon l'invention permet, pour une même probabilité de fausse alarme, d'augmenter le nombre de signaux utiles détectés. Pour $\Lambda = 1.28$, nous avons :

- 6.6 signaux utiles détectés par 50 ms et un seuil de détection de 12.9 dB selon l'art antérieur tel que décrit en préambule,
- 9.0 signaux utiles détectés par 50 ms et un seuil de détection de 11.7 dB selon l'invention.

Le procédé selon l'invention permet donc de diminuer le seuil de détection de 1.2 dB et de détecter en moyenne 2.4 signaux utiles de plus par période de 50 ms dans le cas du fond stratosphérique. De plus, les fausses alarmes détectées avec le procédé selon l'invention auront un impact limité sur l'estimation puisque leur fréquence est dans la bande des signaux utiles et donc proche de la fréquence recherchée.

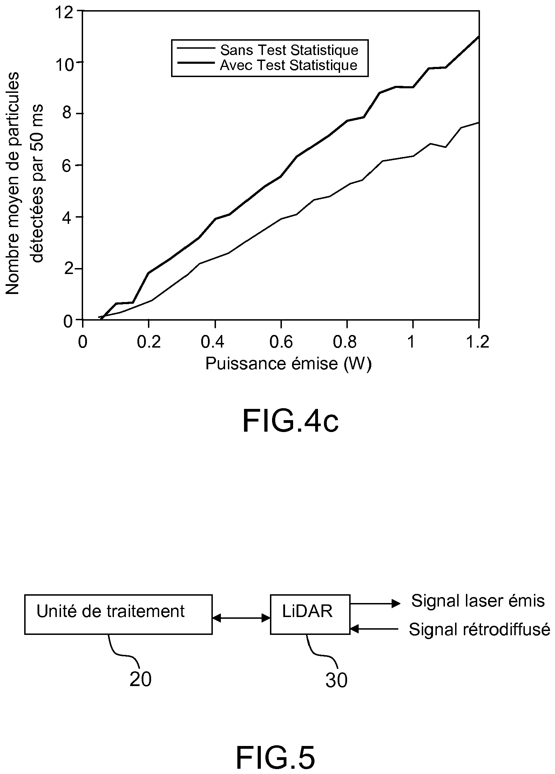

- A puissance laser donnée, le procédé selon l'invention permet d'augmenter le nombre moyen de particules détectées par rapport au procédé décrit en préambule. Comme montré sur la figure 4c, avec un laser de 1 W, on augmente le nombre moyen de particules détectées pendant 50 ms de près de 40%. Ou pour un nombre moyen de particules donné, on peut diminuer la puissance du laser en utilisant le procédé selon l'invention.
- L'amplitude du signal rétrodiffusé par une particule n'est pas directement fonction du rayon de la particule mais de la surface efficace de rétrodiffusion. Pour les particules dont le rayon est du même ordre de grandeur que la longueur d'onde du laser, la surface de rétrodiffusion est calculée à partir de la théorie de Mie. On a constaté que selon le procédé de l'art antérieur, le rayon minimal d'une particule pouvant produire un signal détectable est d'environ 0.18 $\mu$m. Avec le procédé selon l'invention, le seuil est diminué de 1.2 dB et un signal issu du passage d'une particule d'un rayon supérieur à 0.165 $\mu$m peut être détecté, ce qui est avantageux : le nombre de particules détectables augmente de 30 %.

Si moins de N signaux ont été sélectionnés, N étant prédéterminé, alors on calcule la vitesse radiale de la manière suivante.

$$V_r = \frac{\lambda}{2}\frac{\sum_{f(c_f(f)>\alpha)} f.C_f(f)}{\sum_{f(c_f(f)>\alpha)} C_f(f)}$$

ou encore

$$Vr = \frac{\lambda}{2}\mathrm{f}(\max_{(c_f(f)>\alpha)} C_f(f)),$$

soit plus généralement,

$$Vr = f(\lambda, \alpha, f, C_f).$$

On a typiquement N déterminé pour que $\sigma_{Vr}$, l'incertitude sur Vr soit inférieure à une incertitude prédéterminée expérimentalement. On a par exemple :

$$\sigma_{V_r} \leq 0.15 \, m/s$$

Ce mode de calcul peut éventuellement être réalisé directement après le calcul de l'écart, sans sélectionner une bande de fréquence réduite. On a alors :

$$V_r = \frac{\lambda}{2} \frac{\sum_f f.C_f(f)}{\sum_f C_f(f)}$$

ou encore

$$Vr = \frac{\lambda}{2} f(\max C_f(f)),$$

soit plus généralement,

$$Vr = f(\lambda, f, C_f).$$

Sinon, au moins N signaux ayant été sélectionnés, on estime la fréquence centrale pour chaque signal utile détecté et on estime la vitesse à partir de ces fréquences centrales.

$$V_r = \frac{\lambda}{2} \frac{\sum_{n=1}^{N_{sig}} f_0(n)}{N_{sig}}$$

$N_{sig}$ : nombre de signaux détectés
$f_0$ : fréquence centrale d'un signal.

Ce procédé de mesure de la vitesse d'un aéronef peut notamment s'implémenter à partir d'un produit programme d'ordinateur, ce programme d'ordinateur comprenant des instructions de code permettant d'effectuer les étapes du procédé de reconstruction. Il est enregistré sur un support lisible par l'unité de traitement 20 d'un ordinateur, reliée au LiDAR 30 de l'aéronef comme on peut le voir figure 5, l'ordinateur étant de préférence embarqué à bord de l'aéronef mais pas nécessairement. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

**Revendications**

1.  Procédé de mesure de la vitesse d'un aéronef équipé d'un lidar à détection cohérente (30) et d'une unité (20) de traitement du signal détecté, qui comporte les étapes suivantes :

    - émission par le lidar d'un faisceau laser (1),

- réception par le lidar d'un signal rétrodiffusé par des particules (5) présentes sur le trajet du faisceau émis et obtention du signal hétérodyne correspondant,
- traitement du signal hétérodyne par l'unité de traitement qui comporte les sous-étapes suivantes :

    - analyse temps-fréquence du signal hétérodyne pour obtenir une représentation temps-fréquence ou RTF de ce signal hétérodyne,
    - estimation de la vitesse de l'aéronef à partir de l'analyse temps-fréquence,

**caractérisé en ce que** l'étape de traitement du signal hétérodyne comporte une sous-étape de test statistique avec :

    - estimation d'une fonction statistique de l'amplitude de la RTF du signal hétérodyne, dans une plage de valeurs correspondant à une plage de vitesses de l'aéronef prédéterminée,
    - un bruit de mesure étant associé au signal hétérodyne, estimation d'une fonction statistique de référence de la RTF de ce bruit,
    - calcul d'un écart entre la fonction statistique de la RTF du signal hétérodyne et la fonction statistique de référence de la RTF du bruit, la vitesse de l'aéronef étant en outre estimée à partir de cet écart.

2.  Procédé de mesure de la vitesse d'un aéronef selon la revendication précédente, **caractérisé en ce que** le test statistique comporte en outre une sélection d'une bande de fréquence à partir de l'écart et d'un seuil prédéterminé.

3.  Procédé de mesure de la vitesse d'un aéronef selon la revendication précédente, **caractérisé en ce que** le test statistique comporte en outre une détection de signaux utiles dans la RTF du signal hétérodyne, dans cette bande de fréquence.

4.  Procédé de mesure de la vitesse d'un aéronef selon la revendication précédente, **caractérisé en ce que** le test statistique comporte en outre une estimation de la fréquence centrale pour chaque signal utile, et **en ce que** l'étape d'estimation de la vitesse de l'aéronef est réalisée à partir de ces fréquences centrales.

5.  Procédé de mesure de la vitesse d'un aéronef selon l'une des revendications précédentes, **caractérisé en ce que** la RTF est obtenue par transformation temps-fréquence ou par transformation temps-échelle.

6.  Procédé de mesure de la vitesse d'un aéronef selon la revendication précédente, **caractérisé en ce que** la transformation temps-fréquence est une Transformée de Fourier Court Terme.

7.  Procédé de mesure de la vitesse d'un aéronef selon l'une des revendications précédentes, **caractérisé en ce que** la fonction statistique est une fonction de répartition ou une loi de distribution.

8.  Procédé de mesure de la vitesse d'un aéronef selon l'une des revendications précédentes, **caractérisé en ce que** le bruit est stationnaire sur la durée d'estimation de la fonction de répartition, associée à ladite plage de vitesses.

9.  Procédé de mesure de la vitesse d'un aéronef selon l'une des revendications précédentes, **caractérisé en ce que** l'écart calculé est un écart quadratique moyen pondéré ou calculé par un test du $ki^2$ ou de Kolmogorov-Smirnov.

10. Procédé de mesure de la vitesse d'un aéronef selon l'une des revendications précédentes, **caractérisé en ce que** le laser est un laser IR.

11. Un produit programme d'ordinateur, ledit programme d'ordinateur comprenant des instructions de code permettant d'effectuer les étapes du procédé selon l'une quelconque des revendications précédentes, lorsque ledit programme est exécuté sur un ordinateur.

12. Dispositif de mesure de la vitesse d'un aéronef, qui comporte associée à un lidar à détection cohérente, une unité de traitement du signal détecté comprenant des moyens de mise en oeuvre du procédé selon l'une quelconque des revendications 1 à 11.

**Patentansprüche**

1.  Verfahren zum Messen der Geschwindigkeit eines mit kohärenter Lidar-Detektion (30) und einer Einheit (20) zum Verarbeiten des detektierten Signals ausgestatteten Luftfahrzeugs, das die folgenden Schritte beinhaltet:

- Aussenden eines Laserstrahls (1) durch das Lidar;
- Empfangen, durch das Lidar, eines von auf dem Pfad des ausgesendeten Strahls vorhandenen Partikeln (5) zurückgestreuten Signals und Gewinnen des entsprechenden heterodynen Signals;
- Verarbeiten des heterodynen Signals durch die Verarbeitungseinheit, das die folgenden Teilschritte beinhaltet:
- Zeit-Frequenz-Analysieren des heterodynen Signals, um eine Zeit-Frequenz-Darstellung bzw. RTF des genannten heterodynen Signals zu erhalten;
- Schätzen der Geschwindigkeit des Luftfahrzeugs auf der Basis der Zeit-Frequenz-Analyse,

**dadurch gekennzeichnet, dass** der Schritt des Verarbeitens des heterodynen Signals einen Teilschritt des statistischen Testens beinhaltet mit:

- Schätzen einer statistischen Funktion der Amplitude der RTF des heterodynen Signals in einem Wertebereich entsprechend einem vorbestimmten Bereich von Geschwindigkeiten des Luftfahrzeugs;
- Schätzen, wenn ein Messrauschen mit dem heterodynen Signal assoziiert ist, einer statistischen Referenzfunktion der RTF des genannten Rauschens;
- Berechnen einer Abweichung zwischen der statistischen Funktion der RTF des heterodynen Signals und der statistischen Referenzfunktion der RTF des Rauschens, wobei die Geschwindigkeit des Luftfahrzeugs auch auf der Basis der genannten Abweichung geschätzt wird.

2. Verfahren zum Messen der Geschwindigkeit eines Luftfahrzeugs nach dem vorherigen Anspruch, **dadurch gekennzeichnet, dass** das statistische Testen ferner das Auswählen eines Frequenzbands auf der Basis der Abweichung und einer vorbestimmten Schwelle beinhaltet.

3. Verfahren zum Messen der Geschwindigkeit eines Luftfahrzeugs nach dem vorherigen Anspruch, **dadurch gekennzeichnet, dass** das statistische Testen ferner das Detektieren von Nutzsignalen in der RTF des heterodynen Signals in diesem Frequenzband beinhaltet.

4. Verfahren zum Messen der Geschwindigkeit eines Luftfahrzeugs nach dem vorherigen Anspruch, **dadurch gekennzeichnet, dass** das statistische Testen ferner das Schätzen der Mittenfrequenz für jedes Nutzsignal beinhaltet, und dadurch, dass der Schritt des Schätzens der Geschwindigkeit des Luftfahrzeugs auf der Basis dieser Mittenfrequenzen ausgeführt wird.

5. Verfahren zum Messen der Geschwindigkeit eines Luftfahrzeugs nach einem der vorherigen Ansprüche, **dadurch gekennzeichnet, dass** die RTF durch Zeit-Frequenz-Transformation oder durch Zeitskalentransformation erhalten wird.

6. Verfahren zum Messen der Geschwindigkeit eines Luftfahrzeugs nach dem vorherigen Anspruch, **dadurch gekennzeichnet, dass** die Zeit-Frequenz-Transformation eine Kurzzeit-Fourier-Transformation ist.

7. Verfahren zum Messen der Geschwindigkeit eines Luftfahrzeugs nach einem der vorherigen Ansprüche, **dadurch gekennzeichnet, dass** die Statistikfunktion eine Verteilungsfunktion oder ein Verteilungsgesetz ist.

8. Verfahren zum Messen der Geschwindigkeit eines Luftfahrzeugs nach einem der vorherigen Ansprüche, **dadurch gekennzeichnet, dass** das Rauschen über die Schätzungsdauer der mit dem Geschwindigkeitsbereich assoziierten Verteilungsfunktion stationär ist.

9. Verfahren zum Messen der Geschwindigkeit eines Luftfahrzeugs nach einem der vorherigen Ansprüche, **dadurch gekennzeichnet, dass** die berechnete Abweichung eine mittlere quadratische Abweichung ist, die durch einen Chi-Quadrat- oder Kolmogorow-Smirnow-Test gewichtet oder berechnet wird.

10. Verfahren zum Messen der Geschwindigkeit eines Luftfahrzeugs nach einem der vorherigen Ansprüche, **dadurch gekennzeichnet, dass** der Leser ein IR-Laser ist.

11. Computerprogrammprodukt, wobei das Computerprogramm Code-Anweisungen umfasst, die es zulassen, die Schritte des Verfahrens nach einem der vorherigen Ansprüche auszuführen, wenn das Programm auf einem Computer ausgeführt wird.

12. Gerät zum Messen der Geschwindigkeit eines Luftfahrzeugs, das in Assoziation mit kohärenter Lidar-Detektion eine Einheit zum Verarbeiten des detektierten Signals umfasst, die Mittel zum Ausführen des Verfahrens nach einem der Ansprüche 1 bis 11 umfasst.

**Claims**

1. A method for measuring the speed of an aircraft equipped with a coherent detection LIDAR (30) and a unit (20) for processing the detected signal, which method comprises the following steps:

    - the LIDAR emitting a laser beam (1);
    - the LIDAR receiving a signal backscattered by particles (5) present on the path of the emitted beam and obtaining the corresponding heterodyne signal;
    - the processing unit processing the heterodyne signal, which processing comprises the following sub-steps:
    - time-frequency analysing the heterodyne signal in order to obtain a time frequency representation (RTF) of said heterodyne signal;
    - estimating the speed of the aircraft on the basis of the time-frequency analysis,

    **characterised in that** the step of processing the heterodyne signal comprises a substep of statistical testing involving:

    e- estimating a statistical function of the amplitude of the RTF of the heterodyne signal in a range of values corresponding to a predetermined range of speeds of the aircraft;
    - estimating, with a measurement noise being associated with the heterodyne signal, a statistical reference function of the RTF of this noise;
    - computing a deviation between the statistical function of the RTF of the heterodyne signal and the statistical reference function of the RTF of the noise, the speed of the aircraft also being estimated on the basis of this deviation.

2. The method for measuring the speed of an aircraft according to the preceding claim, **characterised in that** the statistical testing further comprises selecting a frequency band based on the deviation and a predetermined threshold.

3. The method for measuring the speed of an aircraft according to the preceding claim, **characterised in that** the statistical testing further comprises detecting useful signals in the RTF of the heterodyne signal in this frequency band.

4. The method for measuring the speed of an aircraft according to the preceding claim, **characterised in that** the statistical testing further comprises estimating the central frequency for each useful signal, and **in that** the step of estimating the speed of the aircraft is carried out on the basis of these central frequencies.

5. The method for measuring the speed of an aircraft according to any one of the preceding claims, **characterised in that** the RTF is obtained by time-frequency transformation or by time-scale transformation.

6. The method for measuring the speed of an aircraft according to the preceding claim, **characterised in that** the time-frequency transformation is a short-term Fourier transform.

7. The method for measuring the speed of an aircraft according to any one of the preceding claims, **characterised in that** the statistical function is a distribution function or a distribution law.

8. The method for measuring the speed of an aircraft according to any one of the preceding claims, **characterised in that** the noise is stationary over the estimation duration of the distribution function associated with said range of speeds.

9. The method for measuring the speed of an aircraft according to any one of the preceding claims, **characterised in that** the computed deviation is a mean square deviation that is weighted or computed by a chi-square or Kolmogorov-Smirnov test.

10. The method for measuring the speed of an aircraft according to any one of the preceding claims, **characterised in that** the laser is an IR laser.

11. A computer program product, said computer program comprising code instructions allowing the steps of the method according to any one of the preceding claims to be carried out when said program is executed on a computer.

12. A device for measuring the speed of an aircraft, comprising, associated with a coherent detection LIDAR, a unit for processing the detected signal that comprises means for implementing the method according to any one of claims 1 to 11.

Signal

↓

Analyse temps-
fréquence

↓ RTF

Détection de signaux
utiles dans la RTF

↓

Estimation des
fréquences centrales
de ces signaux

↓

Estimation de la
fréquence Doppler
sur l'axe de visée

## FIG.1a

RTF

Temps

Fréquence

## FIG.1b

FIG.2

FIG.3b

Signal hétérodyne

Analyse temps-
fréquence

RTF

Test statistique

Ecart, bande de fréquence

Dans cette bande : au moins
N signaux détectés ?

Bande de fréquence | Oui | Non | Ecart

Estimation des fréquences
centrales de ces signaux
utiles

Estimation de la
fréquence Doppler sur
l'axe de visée, à partir de
ces fréquences centrales

Estimation de la fréquence
Doppler sur l'axe de visée,
à partir de l'écart

# FIG.3a

FIG.4a

FIG.4b

FIG.4c

FIG.5

**EP 2 827 174 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2282216 A